# EUROPÄISCHE PATENTSCHRIFT

(11) **EP 3 925 839 B1**
(45) Veröffentlichungstag und Bekanntmachung des Hinweises auf die Patenterteilung: **27.09.2023**
(21) Anmeldenummer: 20465537.7
(22) Anmeldetag: 19.06.2020
(51) Int. Cl.: B60T 7/12

(54) **BREMSGERÄT FÜR EINE HYDRAULISCHE KRAFTFAHRZEUGBREMSANLAGE**
BRAKE DEVICE FOR A HYDRAULIC MOTOR VEHICLE BRAKE SYSTEM
DISPOSITIF DE FREINAGE POUR UNE INSTALLATION HYDRAULIQUE DE FREINAGE DE VÉHICULE

(43) Veröffentlichungstag der Anmeldung: 22.12.2021
(73) Patentinhaber: Continental Automotive Technologies GmbH, 30165 Hannover (DE)
(72) Erfinder: Cristea, Razvan Simion -, 60488 Frankfurt am Main (DE); Varlan, Ionut, 60488 Frankfurt am Main (DE)
(74) Vertreter: Continental Corporation

(56) Entgegenhaltungen:
- CN-A- 101 982 356
- CN-A- 111 086 494
- DE-A1-102012 203 099
- FR-A1- 2 855 137
- FR-A1- 2 877 906
- US-A- 5 261 730

## Beschreibung

Die Erfindung betrifft ein Bremsgerät für eine hydraulische Kraftfahrzeugbremsanlage mit einer Simulatoreinheit, nach dem Oberbegriff des Anspruchs 1, insbesondere eine hydraulische Brake-by-Wire Kraftfahrzeugbremsanlage.

Moderne Brake-by-Wire-Kraftfahrzeugbremsanlagen werden in ihrem regulären Bremsmodus durch sensorbasierte Erfassung eines Bremswunsches vom Fahrer indirekt sowie elektronisch gesteuert gänzlich unabhängig vom Fahrer betätigt. Um einen erforderlichen Systemdruck in einem solchen regulären Bremsmodus zu liefern, wird ein fahrerunabhängig steuerbarer Druckgenerator verwendet, welcher meistens von einem Elektromotor angetrieben wird. Dabei entsteht die Notwendigkeit, dem Fahrer trotz der Fremdansteuerung ein vertrautes sowie komfortables Pedalgefühl zu vermitteln. Es ist bekannt, durch eine spezielle Simulatoreinheit gesondert eine Widerstandsprofil am Pedal zu erzeugten, welches einer konventionellen Bremsanlage möglichst ähnlich ist.

Bei einem Ausfall des Druckgenerators oder einer anderen Störfunktion, in einem sogenannten Rückfallmodus, kann die Simulatoreinheit hydraulisch abgeschaltet werden und der Fahrer kann zumindest eine Notbremsung konventionell mittels einer direkten Betätigung eines Hauptzylinders einleiten, welche zu diesem Zweck von der Simulatoreinheit auf die Reibbremse umgeschaltet wird.

Für verschiedene Fahrzeugapplikationen von verschiedenen Kraftfahrzeughersteller werden meist sehr unterschiedliche, individuelle Kraft-Weg-Profile im Bremspedal gefordert. Solche Kraft-weg-Profile bzw.-Verläufe sollen durch die Simulatoreinheit möglichst exakt reproduziert werden. Damit ist gemeint, dass in dem regulären Trend betätigten Bremsmodus der Fahrer in Abhängigkeit von Hub und Betätigungsgeschwindigkeit des Bremspedals einen ganz bestimmten, definierten Widerstand am erfahren soll. Es ist bekannt, eine solche Auslegung über ein komplexes Zusammenspiel von für jeden Einzelfall speziell ausgelegten und aufeinander abgestimmten Komponenten zu realisieren.

Diese Komponenten müssen oft kundenspezifisch für jede einzelne unterschiedliche Bremspedalcharakteristik des Kunden individuell entwickelt, getestet und hergestellt werden. Dies führt seinem sehr hohen Aufwand bei Entwicklung, Herstellung und Logistik.

Aus CN 101 982 356 A ist eine Simulatoreinheit bekannt umfassend eine mit einer magnetorheologischen Flüssigkeit gefüllten Kammer. In der Kammer ist ein Kolben mit einem verringerten Durchmesser verschiebbar angeordnet, wobei in den Kolben eine elektromagnetischen Spule integriert ist. Durch entsprechende Ansteuerung der Spule kann der Widerstand auf den Kolben bei seiner Bewegung durch die Kammer verändert werden. Präzision, Ansprechverhalten und Komplexität des elektrischen Konstruktion und Steuerung erscheinen bei einer derartigen Konfiguration jedoch verbesserungswürdig.

Aus FR 2855137 A1 ist ein Simulator bekannt, bei dem magnetorheologische Flüssigkeit durch eine Potentialdifferenz zwischen einem unter elektrische Spannung gesetztem Kopf des Kolbens und der als Masse dienenden Bohrung beeinflusst wird. Nachteilig bei einer derartigen Lösung sind zu nennen unter anderem eine Aufwändige elektrische Isolierung, funktionsbedingt beschränkte Werkstoffauswahl, und die Notwendigkeit bewegte Komponenten elektrisch zu kontaktieren.

Aus FR 2877906 A1 ist ein Simulator bekannt, bei welchem ein Kolben durch eine fußbetätigte Kolbenstange direkt mechanisch durch eine Kammer bewegt wird, welche mit einer magnetorheologischen Flüssigkeit gefüllt ist. Eine um die Kammer herum angeordnete Spule dient zur Erzeugung des benötigten Magnetfeldes. Durch einen derartigen Aufbau wird die Positionierung des Simulators auf unmittelbare Umgebung des Fußpedals beschränkt. Darüber hinaus ist direkte Notbetätigung der hydraulischen Bremse in der Rückfallebene bei Funktionsausfall nicht vorgesehen.

Es stellt sich somit eine Aufgabe, ein gattungsgemäßes Bremsgerät mit einer Simulatoreinheit anzubieten, mit der sich unterschiedliche Kraft-Weg-Charakteristika besonders effektiv und kostengünstig realisieren lassen und bekannte Nachteile vermieden würden.

Die Aufgabe wird erfindungsgemäß durch ein Bremsgerät mit der Merkmalskombination nach Anspruch 1 gelöst. Unteransprüche geben weitere vorteilhafte Ausführungen und Weiterbildungen der Erfindung an.

Die Erfindung sieht vor, dass die Simulatoreinheit wenigstens einen in einer Kolbenbohrung axial verschiebbaren Hubkolben umfasst, welcher entlang seines Hubes eine magnetorheologische Flüssigkeit über eine hydraulische Verbindung aus einer ersten Kammer in eine zweite Kammer verdrängt.

Die Kraft-Weg-Charakteristik der Simulatoreinheit kann so durch eine gezielte Veränderung der Viskosität der magnetorheologischen Flüssigkeit nach Bedarf nahezu beliebig eingestellt werden. Gleiche Simulatoreinheit kann für unterschiedliche kundenspezifische Applikationen und Anwendungen maßgeschneidert angepasst werden, ohne dass andere oder zusätzliche Komponenten benötigt werden. Entwicklung, Herstellung und Logistik werden erheblich vereinfacht.

Zum effektiven Erzeugen eines elektromagnetischen Feldes zwecks Beeinflussung der magnetorheologische Flüssigkeit sieht die Erfindung vor, dass die Simulatoreinheit wenigstens einen elektrisch an steuerbaren Feldgenerator aufweist, welcher bevorzugt als eine elektromagnetische Spule ausgebildet ist oder wenigstens eine solche Spule umfasst. Die Varianz der Viskosität der magnetorheologischen Flüssigkeit wäre dadurch an die momentane Feldstärke des elektromagnetischen Feldes gekoppelt, welches einfach und effektiv von einer elektronischen Steuereinheit durch Variationen der entsprechenden elektrischen Versorgung auf Basis einer bereitgestellten Software flexibel moduliert werden kann. Unterschiedliche Kraft-Weg-Charakteristika der Simulatoreinheit können mit derselben Baugruppe allein durch unterschiedliche Softwareeinstellungen erreicht werden. Bei Bedarf kann im selben Fahrzeug unterschiedliche Bremsprofile nach Fahrerwunsch eingestellt werden, beispielsweise ein Normal- oder ein Sportmodus. Die Einstellung der Kraft-Weg-Charakteristik kann sehr fein auch nach Einbau des Bremsgerät im Fahrzeug erfolgen sogar jedes Fahrzeug individuell kalibriert werden

Für einen besonders kompakten Aufbau sieht die Erfindung vor, dass die erste Kammer und die zweite Kammer in derselben Kolbenbohrung, axial auf gegenüberliegenden Seiten des darin befindlichen Abschnitts des Hubkolbens angeordnet sind.

Gemäß einer ersten Ausführungsform kann die hydraulische Verbindung als ein oder mehrere Durchgangskanäle oder Durchgangsbohrungen durch den Abschnitt des Kolbens zwischen den beiden Kammern ausgebildet werden. Dadurch eine besonders exakte Führung des Hubkolbens in der Kolbenbohrung sichergestellt werden.

Gemäß einer anderen besonders einfach kostengünstig herstellbaren Ausführungsform des Hubkolbens kann die hydraulische Verbindung zwischen einer Mantelfläche der Kolbenbohrung und einem radialen Außenrand des Hubkolbens ausgebildet sein, beispielsweise in Form eines Ringspaltes oder als Axialnuten.

Um die Viskositätvarianz der magnetorheologischen Flüssigkeit besonderes exakt und feinfühlig wegabhängig einstellen zu können sieht Erfindung vor, dass der Feldgenerator derart angeordnet ist, dass der Hubkolben sich entlang seines Hubes relativ zum Feldgenerator axial verschiebt.

Gemäß einer er bevorzugten Weiterbildung kann der Feldgenerator sich in axiale Richtung im Wesentlichen entlang des gesamten Hubes des Hubkolbens erstreckt.

Ein besonders homogenes wirksames elektromagnetisches Feld und dadurch ein hoher Wirkungsgrad und eine exakte Reproduzierbarkeit der Charakteristik in allen Fahrzeuglagen und Betriebszuständen kann erreicht werden, wenn der Feldgenerator den Hubkolben in wenigstens einer Betriebsposition und vorzugsweise entlang des gesamten Hubes radial außen umschließt.

Gemäß einer anderen Form kann der Hubkolben zumindest an seinem innerhalb des Feldgenerators befindlichen Abschnitt aus einem magnetisierbaren Werkstoff ausgebildet sein. Dadurch wirkt das elektromagnetische Feld unmittelbar direkt auf den Hubkolben, so dass dieser zusätzlich zu einer gezielten Beeinflussung der Gegenkraft Fg eingesetzt werden kann.

Ein besonderes kostengünstigen und effizienten Aufbau Simulatoreinheit bevorzugte Ausführungsform ferner vor, dass die Kolbenbohrung als ein gesondertes, einbaubares Bauteil vorliegt und einen dünnwandigen rohrförmigen Abschnitt aufweist, welche denn Hubkolben abschnittsweise radial außen umgreift.

Der Herstellbarkeit der Simulatoreinheit weiter zu verbessern kann der Feldgenerator radial um den rohrförmigen Abschnitt herum aufgebaut bzw. angeordnet sein. So können die beiden Komponenten innerhalb einer gemeinsamen vormontierbaren Baugruppe kombiniert, um zusammen in die Simulatoreinheit eingebaut zu werden.

ZurVerbesserung der Herstellbarkeit ist der Hubkolben erfindungsgemäß mehrteilig ausgebildet, mit wenigstens einem durch die Bremsflüssigkeit beaufschlagten Antriebsteil und einem in die Kolbenbohrung eintauchenden Abtriebsteil, auf welches die magnetorheologische Flüssigkeit einwirkt. Die einzelnen Abschnitte des Hub Kolbens können so hinsichtlich ihrer Formgebung und Werkstoffwahl an ihren jeweiligen Einsatzzweck optimiert und kostengünstig hergestellt werden.

Das erfindungsgemäße Bremsgerät eignet sich besonders bevorzugt für eine Brake-by-Wire-Kraftfahrzeugbremsanlage, bei welcher in einem standardmäßig vorliegenden regulären Bremsmodus die Bewegungen des durch den Fahrer betätigten Betätigungsglieds lediglich sensorisch erfasst werden und die von dem Fahrer gespürte Gegenkraft an Betätigungsglied im Wesentlichen alleine Simulatoreinheit produziert wird.

Weitere Merkmale und Vorteile der Erfindung ergeben sich aus der nachfolgenden Beschreibung. Nachstehend zeigten:
Fig.1 einen prinzipiellen Aufbau eines gattungsgemäßen Bremsgeräts.
Fig.2 beispielhaftes Kraft-Weg-Diagramm einer Simulatoreinheit gemäß Fig.1.
Fig.3 beispielhafte Darstellung eines gattungsgemäßen Brake-by-Wire-Bremsgeräts in Außenansicht (a) sowie Innentopologie mit einigen stark vereinfacht dargestellten Elementen (b).
Fig.4 ein Ausführungsbeispiel einer erfindungsgemäßen Simulatoreinheit in Axialschnitt.
Fig.5 vergrößerte Darstellungen eines ersten Ausführungsbeispiels des Hubkolbens für eine Simulatoreinheit gemäß Fig.4 im Bereich der hydraulischen Verbindung.
Fig.6 vergrößerte Darstellungen eines zweiten Ausführungsbeispiels des Hubkolbens für eine Simulatoreinheit gemäß Fig.4 im Bereich der hydraulischen Verbindung.
Fig.7 bis 9 drei Ausführungsbeispiele des Hubkolbens mit unterschiedlich ausgebildeten hydraulischen Verbindungen.

### Fig.1

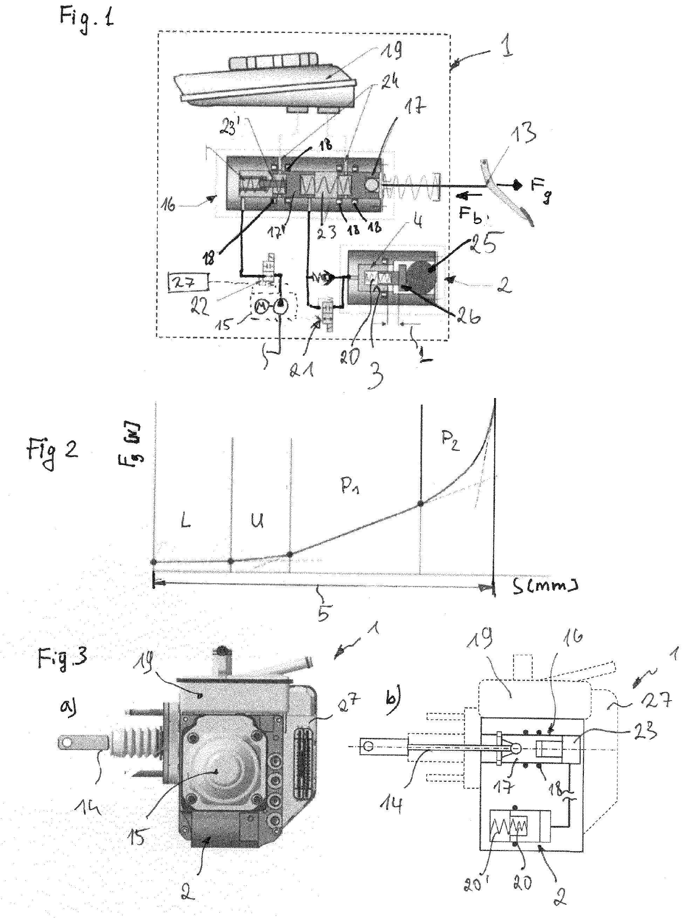

Fig.1 zeigt beispielhaft ein Teil eines gattungsgemäßes Bremsgeräts 1 mit einer bekannten Simulatoreinheit 3 als vereinfachte Prinzipaufbauskizze.

Das Bremsgerät 1 verfügt über einen von einem Fahrer durch ein Betätigungsglied 14 mit einem Betätigungskraft Fb betätigbaren Hauptzylinder 16, welcher in dem gezeigten Beispiel als ein Tandem-Hauptzylinder gewählt ist.

Grundsätzlich kann die Erfindung auch bei anderen Hauptzylindervarianten eingesetzt werden. Ebenso kann das Betätigungsglied 14 innerhalb der Findung statt hier dargestellten Bremspedals auch andersartig, beispielsweise als ein Bremshebel vorliegen.

In dem dargestellten Tandem-Hauptzylinder 16 begrenzen ein durch den Fahrer direkt betätigbar primärer Kolben 17 unter in sekundärer Kolben 17` 2 mit einer Bremsflüssigkeit gefüllten Druckkammern ein 20,23`, welche aus einem Druckmittelbehälter 19 über Nachlaufbohrungen24 gespeist werden.

Das Bremsgerät 1 kann in einem regulären Bremsmodus und in einem irregulären Bremsmodus, einer sogenannten Rückfallebene betrieben werden. In dem regulären Bremsmodus werden Bewegungen des Betätigungsglieds 14 durch eine hier nicht gezeigte Sensoranordnung erfasst, woraufhin eine elektronische Steuereinheit 27 einen elektromotorischen angetriebenen Druckgenerator 15 ansteuert. Der Druckgenerator 15 erzeugt den erforderlichen Betriebsbremsdruck für die hier nicht gezeigten Radbremsen. Bei Bedarf kann der Druckgenerator 15 auch gänzlich Fahrer unabhängig angesteuert werden, beispielsweise im Falle bei einem autonomen Fahrmodus.

Die Druckkammer 23 des Hauptzylinders 16 ist im regulären Bremsmodus hydraulisch auf eine Simulator Einheit 2 aufgeschaltet. Ein elektrisch steuerbares, normal geschlossenes Sperrventil 21 steuert die diese Aufschaltung. Die Simulatoreinheit 2 weist einen Hubkolben 4 auf, welcher durch die Bremsflüssigkeit aus dem Haupt Zylinder 16 axial verschoben wird und dabei im Verlaufe seines Hubes ein Federelement 20 und ein Elastomer 25 komprimiert, wodurch ein charakteristischer wegabhängiger Widerstand erzeugt wird, welcher von dem Fahrer als eine seiner aufgebrachten Betätigungskraft Fb entgegengerichtete Gegenkraft Fg im Betätigungsglied gespürt wird.

Bei einer Fehlfunktion, beispielsweise bei Ausfall der Sensorik, der elektrischen Versorgung oder einer Störung des Druckgenerators 15, wird das System in einen irregulären Bremsmodus versetzt. Dabei wird die Simulatoreinheit 2 durch das Sperrventil 21 von dem Hauptzylinder 16 hydraulisch getrennt. Der Betriebsbremsdruck wird daraufhin unmittelbar in den Druckkammern 23,23` des Hauptzylinders (16) durch Muskelkraft des Fahrers erzeugt und an die hier nicht gezeigten Reibbremsen geleitet. Eine weitere elektrisch steuerbare, normal geöffnete Ventilanordnungen 22 ermöglicht in Rückfallebene eine direkte Ausschaltung des Hauptzylinders 16 auf die Radbremsen.

### Fig.2

Fig. 2 zeigt beispielhaft einen typischen Kraft-Weg-Verlauf bzw. die Charakteristik einer Simulatoreinheit 2, welche einem gewohnten Verlauf der Gegenkraft Fg bei einer konventionellen Bremsanlage nachempfunden ist.

Die gesamte Hub 5 des Hubkolbens 4 kann in mehrere aufeinanderfolgenden Anteile aufgeteilt werden, welche durch spezifische Verläufe der Gegenkraft Fg charakterisiert sind. Der erste Linearanteil L reproduziert das lineare Hubanteil eines Bremspedals zu Beginn der Bremsphase. Es entspricht einem Pedalweg, welcher erforderlich ist, um beispielsweise die Bremsbeläge in Kontakt mit einer Bremsscheibe zu bringen. Dieser Pedalweg ist von mehreren Faktoren abhängig, beispielsweise vom Luftspalt zwischen Bremsbelägen und Bremsscheibe, vom Spiel in der Betätigungsmechanik, einem Verlustweg im Hauptzylinder 16 usw. Der Linearanteil L wird in eine Simulatoreinheit 2 gemäß Fig.1 durch das Federelement 20 realisiert, welcher komprimiert wird bis der Hubkolben 4 auf ein Druckstück 26 stößt.

Dem Linearanteil L folgt ein Übergangsanteil U, welcher einer Anfangsphase Bremsdrucksaufbaus in einer konventionellen Bremsanlage reproduziert. Für die Charakteristik des Übergangsanteils U ist in einer Simulatoreinheit 2 gemäß Fig.1 insbesondere die Konstruktion des Druckstücks 26 verantwortlich, welches durch den Hubkolben 4 gegen den Elastomer 25 gepresst wird.

Dem Übergangsanteil U folgt ein erstes Progressivanteil P1, welches in einer konventionellen Bremsanlage beim Kraftanstieg bei einer normalen Bremsung entspricht. Der Kraftverlauf beim ersten Progressivanteil P1 wird in einer Simulatoreinheit 2 gemäß Fig.1 insbesondere durch die Formgebung des Elastomer 25 bestimmt.

Dem ersten Progressivanteil P1 folgt schließlich das zweite Progressivanteil P2 mit einem exponentiell steigenden Kraftverlauf. Dieser Anteil kann beispielsweise einer Vollbremsung in einer konventionellen Bremsanlage reproduzieren und wird in einer Simulatoreinheit 2 gemäß Fig.1 insbesondere durch Werkstoffeigenschaften, beispielsweise Shorehärte des Elastomers 25 definiert.

Um unterschiedliche Kraft-Weg-Verläufe zu realisieren müssen daher bei einer Simulatoreinheit 2 gemäß Fig.1 oft sämtliche Komponenten verändert werden.

### Fig.3

Fig.3 zeigt beispielhaft eine Ausführungsform eines gattungsgemäßen Brake-by-Wire-Bremsgeräts 1 in Außenansicht (a) sowie stark vereinfacht die Anordnung von Anbaukomponenten außen am Gehäuse sowie des Hauptzylinders 16 und der Simulatoreinheit 2 im Inneren (b).

### Fig.4

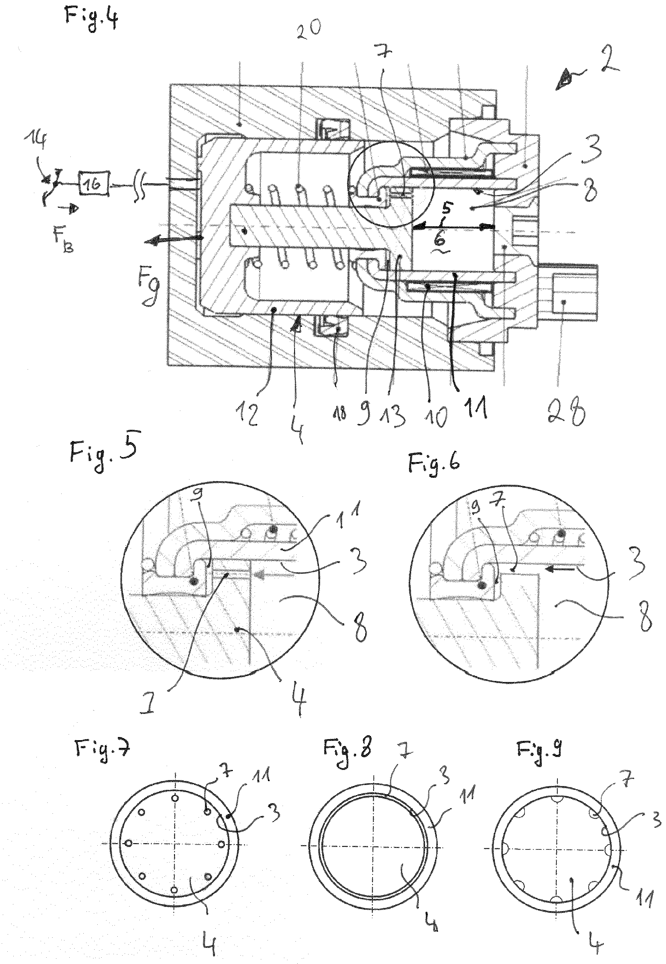

Fig. 4 zeigt eine Ausführungsform einer erfindungsgemäß verbesserten Simulatoreinheit 2.

Der Hubkolben 4 ist mehrteilig ausgebildet. Ein im Bild linksseitig dargestelltes Antriebsteil 12 wird bei Betätigung des Betätigungsglied 14 durch die Bremsflüssigkeit aus dem Hauptzylinder 16 beaufschlagt und dadurch axial (im Bild nach rechts) versetzt. Ein an das Antriebsteil 12 starr gekoppeltes Abtriebsteil 13 wird dabei zwangsweise in einer Kolbenbohrung 3 axial verschoben. Der Innenraum der Kolbenbohrung 3 ist nach Außen abgedichtet und ist vollständig mit einer magnetorheologischen Flüssigkeit 6 gefühlt.

Die Kolbenbohrung 3 ist bei dem gezeigten Ausführungsbeispiel durch die innere Mantelfläche eines gesonderten Bauteils mit einem dünnwandige rohrförmigen Abschnitt 11 erzeugt. Der rohrförmige Abschnitt 11 ist radial außen von einer elektrischen Spule umschlossen, welche als ein Feldgenerator 10 umschlossen ist zum Erzeugen eines elektromagnetischen Feldes innerhalb der Kolbenbohrung 3 fungiert. Die Spule bzw. der Feldgenerator 10 streckt sich in axiale Richtung entlang des gesamten Hubes 5 des Hub Kolbens 4. Eine elektrische Schnittstelle 28 dient zur Steuerung des Feldgenerators 10 durch die elektronische Steuereinheit 27 und Versorgung mit elektrischer Energie. Innerhalb der Findung muss der Feldgenerator 10 nicht notwendigerweise mit einer einzelnen Spule ausgebildet sein, er kann auch mehrere Spulen aufweisen oder unter Beibehaltung äquivalenter Funktionalität auch gänzlich anders aufgebaut sein.

Eine magnetorheologische Flüssigkeit 6 ist bekanntlich eine Suspension von magnetisierbaren Partikeln in einer Trägerflüssigkeit. Beim Anlegen eines Magnetfeldes, infolge der magnetischen Wechselwirkungen zwischen den Partikeln erhöhen sich die Schubspannungen innerhalb der Flüssigkeit in Abhängigkeit von der magnetischen Flussdichte von einer leichten Erhöhung die Viskosität bis hin zur völligen Versteifung. Dieser Vorgang ist vollständig reversibel.

In seinem Abtriebsteil 12 begrenzt der Hubkolben 4 in der Zylinderbohrung 3 zwei axial gegenüberliegende und durch das Abtriebsteil 12 voneinander abgegrenzten Kammern 8, 9, welche über eine hydraulische Verbindung 7 miteinander verbunden sind.

Bei Betätigung des Betätigungsglied 14 wird auf den Hubkolben 4 ein hydraulischer Druck ausgeübt. Infolgedessen wird das Abtriebsteil 12 des Hubkolbens 4 durch die Zylinderbohrung 3 getrieben und beaufschlagt dabei die darin enthaltene magnetorheologische Flüssigkeit 6. Dabei entsteht ein Extrusionseffekt, weil die magnetorheologische Flüssigkeit 6 durch die hydraulische Verbindung 7 aus der ersten Kammer 8 die zweite Kammer 9 verdrängt wird. Beim Anlegen von elektrischem Strom an die Spule erzeugt des Weltgenerator 10 wird ein Magnetfeld, welcher eine Erhöhung der Viskosität der magnetorheologische Flüssigkeit 6 verursacht. Die beim Durchströmen der magnetorheologischen Flüssigkeit 6 durch die hydraulische Verbindung 7 auf den Hubkolben 4 entgegen seiner Bewegungsrichtung wirkende Kraft erhöht sich dadurch. Diese Krafterhöhung wird vom Fahrer als eine Erhöhung der Gegenkraft Fg am Betätigungsglied 14 empfunden. Je mehr Strom im Feldgenerator 10 angelegt wird, desto stärker wird das Magnetfeld und umso höher die Viskosität magnetorheologische Flüssigkeit 6 umso höher die Gegenkraft Fg.

Die Höhe des angelegten Stroms bzw. die Magnetfeldstärke kann fein variiert werden, wodurch der hydraulische Widerstand der Simulatoreinheit 2 und somit der charakteristische Kraft-weg-Verlauf nahezu beliebig eingestellt werden kann.

Innerhalb der Findung kann das Abtriebsteil 12 aus einem magnetisierungsbaren Werkstoff erzeugt werden. Dadurch wirkt das Magnetfeld aufgrund von Lorentzkräften unmittelbar auf den Hubkolben 4. In Abhängigkeit von seiner axialen Position des Hub Kolbens in Relation zum Feldgenerator 10 kann so die Gegenkraft Fg durch den Hubkolben 4 unmittelbar direkt, zusätzlich zum Effekt der magnetorheologischen Flüssigkeit 6 beeinflusst werden.

### Fig.5

Fig.5 zeigt vergrößert den die Ausführungsform des Hubkolbens 4 gemäß Fig.4 im Bereich der hydraulischen Verbindung 7 zwischen der ersten und der zweiten Kammern 8, 9. Die hydraulische Verbindung 7 ist hier als mehrere über den Umfang verteilten Durchgangskanäle bzw. Bohrungen gestaltet.

### Fig.6

Fig. 6 zeigt eine andere Ausführungsform des Hubkolbens 4. Die hydraulische Verbindung 7 ist bei dieser Ausführung nicht mehr durch den Hubkolben 4 hindurch, sondern als ein Durchgang zwischen der inneren Mantelfläche der Kolbenbohrung 3 und dem radialen Außenrand des Hubkolbens 4 im Bereich der Mantelfläche gestaltet.

### Fig.7

Fig. 7 verdeutlicht in Draufsicht die Ausführung des Hubkolbens 4 gemäß Fig.4 und 5 im Bereich der hydraulischen Verbindung 7 in Draufsicht. Wie bereits vorstehend beschrieben ist die hydraulische Verbindung 7 als mehrere über den Umfang verteilten Durchgangskanäle ausgebildet, welche in Summe einen gemeinsamen Durchtrittsquerschnitt für die magneturologische Flüssigkeit bilden Fig.8

Fig. 8 zeigt die Ausführungsform des Hubkolbens 4 gemäß Fig 6. Die hydraulische Verbindung 7 liegt vor als ein radialer Spalt zwischen der inneren Mantelfläche der Kolbenbohrung 3 und dem Kolben 4.

### Fig.9

Fig. 9 zeigt eine andere Ausführungsform des Hubkolbens 4. Die hydraulische Verbindung 7 ist hier ähnlich wie bei der Ausführung gemäß Figuren 6 und 8 zwischen der inneren Mantelfläche der Kolbenbohrung 3 und einem radialen Außenrand des Hubkolbens 4 angeordnet, jedoch nicht als ein umlaufender Spalt, sondern als eine über den Umfang verteilte Ansammlung von Axialnuten im Hubkolben 4.

### Bezugszeichen

- 1: Bremsgerät
- 2: Simulatoreinheit
- 3: Kolbenbohrung
- 4: Hubkolben
- 5: Hub
- 6: magnetorheologische Flüssigkeit
- 7: hydraulische Verbindung
- 8: erste Kammer
- 9: zweite Kammer
- 10: Feldgenerator
- 11: rohrförmiger Abschnitt
- 12: Antriebsteil
- 13: Abtriebsteil
- 14: Betätigungsglied
- 15: Druckgenerator
- 16: Hauptzylinder
- 17: Kolben
- 18: Dichtelement
- 19: Druckmittelbehälter
- 20: Federelement
- 21: Sperrventil
- 22: Ventilanordnung
- 23: Druckkammer
- 24: Nachlaufbohrung
- 25: Elastomer
- 26: Druckstück
- 27: Steuereinheit
- 28: elektrische Schnittstelle
- Fb: Betätigungskraft
- Fg: Gegenkraft
- L: Linearanteil
- U: Übergangsanteil
- P1: erstes Progressivanteil
- P2: zweites Progressivanteil

## Patentansprüche

1. Bremsgerät (1) für eine Fahrzeugbremsanlage, umfassend wenigstens eine Simulatoreinheit (2) zum gesonderten Erzeugen einer auf ein von einem Fahrer betätigtes Betätigungsglied (14) entgegen einer Betätigungskraft (Fb) wirkenden Gegenkraft (Fg), wobei die Simulatoreinheit (2) wenigstens einen zumindest abschnittsweise in einer Kolbenbohrung (3) axial verschiebbaren Hubkolben (4) umfasst, welcher entlang seines Hubes (5) eine magnetorheologische Flüssigkeit (6) über eine hydraulische Verbindung (7) aus einer ersten Kammer (8) in eine zweite Kammer (9) verdrängt, wobei die erste Kammer (8) und die zweite Kammer (9) in der Kolbenbohrung (3) angeordnet und durch den Hubkolben (4) abgegrenzt sind und wobei die Simulatoreinheit (2) wenigstens einen Feldgenerator (10) zum Erzeugen eines elektromagnetischen Feldes aufweist, welches die Viskosität der magnetorheologischen Flüssigkeit (6) beeinflusst, **dadurch gekennzeichnet, dass** der Feldgenerator (10) derart eingerichtet ist, dass dieser den Hubkolben (4) in wenigstens einer Betriebsposition radial außen umschließt und der Hubkolben (4) sich entlang seines Hubes (5) relativ zum Feldgenerator (10) axial verschiebt und wobei der Hubkolben (4) mehrteilig ausgebildet ist mit wenigstens einem Antriebsteil (12) welches durch eine Bremsflüssigkeit beaufschlagt wird und mit wenigstens einem Abtriebsteil (13), welches die magnetorheologische Flüssigkeit (6) beaufschlagt.

2. Bremsgerät (1)nach Anspruch 1 **dadurch gekennzeichnet, dass** die hydraulische Verbindung (7) als wenigstens ein Durchgangskanal durch den Hubkolben (4) ausgebildet ist.

3. Bremsgerät (1)nach Anspruch 1 **dadurch gekennzeichnet, dass** die hydraulische Verbindung (7) zwischen einer Mantelfläche der Kolbenbohrung (3) und einem radialen Außenrand des Hubkolbens (4) ausgebildet ist.

4. Bremsgerät (1) nach wenigstens einem der vorstehenden Ansprüche **dadurch gekennzeichnet, dass** der Feldgenerator (10) als wenigstens eine Spule ausgebildet ist oder wenigstens eine Spule umfasst.

5. Bremsgerät (1) nach wenigstens einem der vorstehenden Ansprüche **dadurch gekennzeichnet, dass** der Feldgenerator (10) in axiale Richtung im Wesentlichen entlang des gesamten Hubes (5) des Hubkolbens (4) erstreckt.

6. Bremsgerät (1) nach wenigstens einem der vorstehenden Ansprüche **dadurch gekennzeichnet, dass** der Hubkolben (4) zumindest abschnittsweise aus einem magnetisierbaren Werkstoff ausgebildet ist, so dass dieser durch den Feldgenerator (10) unmittelbar zum hubabhängigen Beeinflussen der Gegenkraft (Fg) eingesetzt ist.

7. Bremsgerät (1) nach wenigstens einem der vorstehenden Ansprüche **dadurch gekennzeichnet, dass** die Kolbenbohrung (3) als ein gesondertes Bauteil mit einem rohrförmigen Abschnitt (11) ausgebildet ist, in dem der Hubkolben (4) zumindest abschnittsweise aufgenommen ist.

8. Bremsgerät (1) nach Anspruch **7dadurch gekennzeichnet, dass** der rohrförmige Abschnitt (11) zumindest bereichsweise radial außen von dem Feldgenerator (10) umschlossen ist.

9. Bremsgerät (1) nach wenigstens einem der vorstehenden Ansprüche **dadurch gekennzeichnet, dass** der Hubkolben (4) durch die mittels des Betätigungsglieds (14) verdrängte Bremsflüssigkeit betätigt wird.

10. Bremsgerät (1) nach wenigstens einem der vorstehenden Ansprüche **dadurch gekennzeichnet, dass** das Bremsgerät (1) in wenigstens einem regulären Bremsmodus und in wenigstens einem irregulären Bremsmodus betreibbar ist,
• wobei in dem regulären Bremsmodus Bewegungen des Betätigungsglied (14) sensorisch erfasst und ein Betriebsbremsdruck durch einen fahrerunabhängig steuerbaren elektromotorisch angetriebenen Druckgenerator (15) erzeugt wird,
• wobei in dem irregulären Bremsmodus der Betriebsbremsdruck in einem Hauptzylinder (16) durch wenigstens einen durch das Betätigungsglied (14) betätigten Kolben (17) erzeugt wird,
• wobei die Simulatoreinheit (2) in dem regulären Bremsmodus hydraulisch auf den Hauptzylinder (16) aufgeschaltet und in dem irregulären Bremsmodus hydraulisch von dem Hauptzylinder (16) getrennt ist.

## Claims

1. Brake device (1) for a vehicle brake system, comprising at least one simulator unit (2) for the separate generation of a counterforce (Fg) which acts counter to an actuating force (Fb) on an actuating member (14) which is actuated by a driver, the simulator unit (2) comprising at least one reciprocating piston (4) which can be moved axially at least in portions in a piston bore (3) and, along its stroke (5), displaces a magnetorheological fluid (6) via a hydraulic connection (7) out of a first chamber (8) into a second chamber (9), the first chamber (8) and the second chamber (9) being arranged in the piston bore (3) and being delimited by way of the reciprocating piston (4), and the simulator unit (2) having at least one field generator (10) for generating an electromagnetic field which influences the viscosity of the magnetorheological fluid (6), **characterized in that** the field generator (10) is configured in such a way that it encloses the reciprocating piston (4) radially to the outside in at least one operating position, and the reciprocating piston (4) is displaced axially along its stroke (5) relative to the field generator (10), and the reciprocating piston (4) being of multiple-part configuration with at least one drive part (12) which is loaded by way of a brake fluid, and with at least one output part (13) which loads the magnetorheological fluid (6).

2. Brake device (1) according to Claim 1, **characterized in that** the hydraulic connection (7) is configured as at least one passage channel through the reciprocating piston (4).

3. Brake device (1) according to Claim 1, **characterized in that** the hydraulic connection (7) is configured between the shell surface of the piston bore (3) and a radial outer edge of the reciprocating piston (4).

4. Brake device (1) according to at least one of the preceding claims, **characterized in that** the field generator (10) is configured as at least one coil or comprises at least one coil.

5. Brake device (1) according to at least one of the preceding claims, **characterized in that** the field generator (10) extends in the axial direction substantially along the entire stroke (5) of the reciprocating piston (4).

6. Brake device (1) according to at least one of the preceding claims, **characterized in that** the reciprocating piston (4) is configured at least in portions from a magnetizable material, with the result that it is used by way of the field generator (10) directly for stroke-dependent influencing of the counterforce (Fg).

7. Brake device (1) according to at least one of the preceding claims, **characterized in that** the piston bore (3) is configured as a separate component with a tubular portion (11), in which the reciprocating piston (4) is received at least in portions.

8. Brake device (1) according to Claim 7, **characterized in that** the tubular portion (11) is enclosed at least in regions radially on the outside by the field generator (10).

9. Brake device (1) according to at least one of the preceding claims, **characterized in that** the reciprocating piston (4) is actuated by way of the brake fluid which is displaced by means of the actuating member (14).

10. Brake device (1) according to at least one of the preceding claims, **characterized in that** the brake device (1) can be operated in at least one regular brake mode and in at least one irregular brake mode,
• movements of the actuating member (14) being detected by sensor in the regular brake mode, and a service brake pressure being generated by way of a pressure generator (15) which can be controlled independently of the driver and is driven by electric motor,
• the service brake pressure being generated in the irregular brake mode in a master cylinder (16) by way of at least one piston (17) which is actuated by way of the actuating member (14),
• the simulator unit (2) being connected hydraulically to the master cylinder (16) in the regular brake mode, and being disconnected hydraulically from the master cylinder (16) in the irregular brake mode.

## Revendications

1. Dispositif de freinage (1) destiné à un système de freinage de véhicule, ledit dispositif de freinage comprenant au moins une unité de simulation (2) pour générer séparément une force antagoniste (Fg) qui agit sur un élément d'actionnement (14), actionné par un conducteur, en s'opposant à une force d'actionnement (Fb), l'unité de simulation (2) comprenant au moins un piston alternatif (4) qui peut coulisser axialement au moins par portions dans un alésage de piston (3) et qui déplace, le long de sa course (5), un fluide magnéto-rhéologique (6) d'une première chambre (8) jusque dans une deuxième chambre (9) par le biais d'une liaison hydraulique (7), la première chambre (8) et la deuxième chambre (9) étant situées dans l'alésage de piston (3) et délimitées par le piston alternatif (4), et l'unité de simulation (2) comportant au moins un générateur de champ (10) destiné à générer un champ électromagnétique qui influe sur la viscosité du fluide magnéto-rhéologique (6),
**caractérisé en ce que** le générateur de champ (10) est conçu de manière à ce qu'il enferme le piston alternatif (4) radialement vers l'extérieur dans au moins une position de fonctionnement et à ce que le piston alternatif (4) coulisse axialement le long de sa course (5) par rapport au générateur de champ (10) et le piston alternatif (4) étant conçu en plusieurs parties avec au moins une partie d'entraînement (12), qui est soumise à un liquide de frein, et avec au moins une partie de sortie (13) qui agit sur le fluide magnéto-rhéologique (6).

2. Dispositif de freinage (1) selon la revendication 1, **caractérisé en ce que** la liaison hydraulique (7) est conçue sous la forme d'au moins un conduit traversant à travers le piston alternatif (4).

3. Dispositif de freinage (1) selon la revendication 1, **caractérisé en ce que** la liaison hydraulique (7) est formée entre une surface latérale de l'alésage de piston (3) et un bord extérieur radial du piston alternatif (4).

4. Dispositif de freinage (1) selon l'une au moins des revendications précédentes, **caractérisé en ce que** le générateur de champ (10) est conçu sous la forme d'au moins une bobine ou comprend au moins une bobine.

5. Dispositif de freinage (1) selon l'une au moins des revendications précédentes, **caractérisé en ce que** le générateur de champ (10) s'étend en direction axiale sensiblement sur toute la course (5) du piston alternatif (4).

6. Dispositif de freinage (1) selon l'une au moins des revendications précédentes, **caractérisé en ce que** le piston alternatif (4) est conçu au moins par portions à partir d'un matériau magnétisable de sorte qu'il soit utilisé directement par le générateur de champ (10) pour influer sur la force antagoniste (Fg) en fonction de la course.

7. Dispositif de freinage (1) selon l'une au moins des revendications précédentes, **caractérisé en ce que** l'alésage de piston (3) est conçu comme un composant séparé comprenant une portion tubulaire (11) dans laquelle le piston alternatif (4) est reçu au moins par portions.

8. Dispositif de freinage (1) selon la revendication 7, **caractérisé en ce que** la portion tubulaire (11) est entourée au moins par zones radialement à l'extérieur par le générateur de champ (10).

9. Dispositif de freinage (1) selon l'une au moins des revendications précédentes, **caractérisé en ce que** le piston alternatif (4) est actionné par le liquide de frein déplacé au moyen de l'élément d'actionnement (14).

10. Dispositif de freinage (1) selon l'une au moins des revendications précédentes, **caractérisé en ce que** le dispositif de freinage (1) peut fonctionner dans au moins un mode de freinage régulier et dans au moins un mode de freinage irrégulier,
• dans le mode de freinage régulier, les mouvements de l'élément d'actionnement (14) étant détectés par des capteurs et une pression de freinage de service étant générée par un générateur de pression (15) entraîné par un moteur électrique et pouvant être commandé indépendamment du conducteur,
• dans le mode de freinage irrégulier, la pression de freinage de service étant générée dans un maître-cylindre (16) par au moins un piston (17) actionné par l'élément d'actionnement (14),
• l'unité de simulation (2) étant commutée hydrauliquement sur le maître-cylindre (16) dans le mode de freinage régulier et séparée hydrauliquement du maître-cylindre (16) dans le mode de freinage irrégulier.
